# EUROPÄISCHE PATENTSCHRIFT

(11) **EP 0 911 306 B1**
(45) Veröffentlichungstag und Bekanntmachung des Hinweises auf die Patenterteilung: **12.09.2001**
(21) Anmeldenummer: 98115202.8
(22) Anmeldetag: 13.08.1998
(51) Int. Cl.: C04B 41/63, E04C 2/04

(54) **Verwendung eines kalthärtenden Flüssigkunststoffes zur Oberflächenbeschichtung**
Use of a cold curing liquid resin for surface coating
Utilisation de matière plastique durcissable à froid pour des revêtements de surface

(30) Priorität: 22.10.1997 DE 19746577
(43) Veröffentlichungstag der Anmeldung: 28.04.1999
(73) Patentinhaber: SICOTAN Gesellschaft für Kunststoffanwendung mbH, 49090 Osnabrück (DE)
(72) Erfinder:
(74) Vertreter: Stracke, Alexander, Dipl.-Ing.

(56) Entgegenhaltungen:
- EP-A- 0 330 499
- DE-A- 1 954 013
- PATENT ABSTRACTS OF JAPAN vol. 015, no. 100 (C-0813), 11. März 1991 & JP 02 311382 A (MATSUSHITA ELECTRIC WORKS LTD), 26. Dezember 1990

## Beschreibung

Die vorliegende Erfindung betrifft die Verwendung eines kalthärtenden Flüssigkunststoffes zur Oberflächenbeschichtung.

Der Einsatz von Zement als Bindemittel bei dünnwandigen Bauteilen bringt neben einer Reihe von Vorteilen, wie ständige Verfügbarkeit, hohe Druckfestigkeit des Bauteiles sowie Unempfindlichkeit gegen Feuchtigkeit und Wasser auch eine Reihe von Nachteilen mit sich. Neben einer relativ geringen Zugfestigkeit ist dabei insbesondere eine Längenverkürzung des Bauteiles beim Austrocknen zu beklagen mit der Gefahr einer Rißbildung insbesondere dann, wenn die Längenverkürzungen behindert werden und die Zwangsspannungen auftreten.

Neben einem linearen, gleichmäßige Schwinden kann auch ein ungleichmäßiges einseitiges Schwinden auftreten mit der Folge schädlicher Verkrümmungen der sogenannten Schüsselung.

Aus der DE 19 54 013 A ist es bekannt, zementgebundene Bauteile mit einem kalthärtenden Flüssigkunststoff zu beschichten, jedoch ist in dieser Literatur kein Hinweis darauf gegeben, wie zur Schüsselbildung neigende Bauteile zu bearbeiten wären.

Weiter ist schon versucht worden, durch Reduzierung des Anmachwassers, Verwendung von Zusätzen oder Armierung mit Stabstahl, Draht, Baustahlgewebe, Faservlies oder dergleichen das Schwindmaß von Zementmörtel auf eine vertretbare Größe zu reduzieren bzw. evtl. auftretende Risse so zu verteilen, daß sie technisch belanglos wurden, jedoch führten diese Maßnahmen bei einem ungleichmäßigen, einseitigen Schwinden nicht zu dem gewünschten Erfolg, wobei hierzu insbesondere dünnwandige Massivplatten oder Verbundsysteme, wie dünnschichtige Fahrbahnplatten, Sandwich-Platten, Putze oder Estriche neigen.

Der vorliegenden Erfindung liegt daher die Aufgabe zugrunde, ein dünnwandiges, zementgebundenes Bauteil mit planer Oberfläche so auszubilden, daß insbesondere ein ungleichmäßiges, einseitiges Schwinden weitgehend verhindert wird.

Diese Aufgabe wird durch die Verwendung eines kalthärtenden Flüssigkunststoffes zur Oberflächenbeschichtung des Bauteiles gelöst.

Wie sich überraschend gezeigt hat, wird durch eine in diesem Sinn durchgeführte Oberflächenbeschichtung nicht nur eine aus einseitiger Längenverkürzung resultierende Verkrümmung der Oberfläche des Bauteiles nachhaltig vermieden, sondern darüber hinaus eine dauerhaft gleichmäßige Auflagerung des Oberbelages, wie eines Estrichs o.dgl. auf der Unterkonstruktion gewährleistet. Darüber hinaus kann der Oberbelag dünner als bislang möglich ausgeführt sein.

Als kalthärtende Flüssigkunststoffe sind vor allem Epoxidharze, Acrylharze, Polyurethane o.dgl. geeignet. Dabei soll die Oberflächenbeschichtung einen Gehalt an verdampfbaren, flüchtigen Trägerstoffen, z.B. Lösemittel oder Wasser, von weniger als 25 Prozent aufweisen und der Flüssigkunststoff zu einem bestimmten Zeitpunkt, der zwischen 6 Stunden und zehn Tagen nach Herstellung des Oberbelages liegt, aufgebracht werden, wobei die Oberflächenbeschichtung feuchtigkeits- und alkalistabil ist und in einer Menge von 0,05 bis 1,5 kg/m² aufgebracht wird. Die Haftzugfestigkeit zwischen Beschichtung und dem Mörtel oder Beton sollte mindestens 0,5 N/mm² betragen.

Um eine optimale Wirkung des Flüssigkunststoffes zu erzielen, sollte dieser bei einem Restfeuchtegehalt des Untergrundes von weniger als 5 Gewichtsprozent eingebaut werden. Deshalb ist es wichtig, den Restfeuchtegehalt zu einem möglichst frühen Zeitpunkt unter diesen Wert zu bringen, wozu sich folgende Maßnahmen als besonders geeignet gezeigt haben:
1. Wassereinsparung durch Einsatz
   an sich bekannter wasserreduzierender Zusätze
   kombiniert mit:
2. Zementen und Zusätzen, die das
   Anmachwasser schnell binden und so
   zu einer zügigen Abnahme der Gesamtfeuchte
   im Bauteil führen
   kombiniert mit:
3. Einer Bildung von Hohlräumen in dem
   Zementmörtel oder Beton, die das Trocknen
   erleichtern, z.B. durch Luftporen (Schaum,
   Aluminiumpulver) oder Hohlfasern
   kombiniert mit:
4. Natürlicher oder künstlicher Trocknung
   bis zu 10 Tagen, je nach Schichtdicke und
   Raumklima, jedoch nur bis zu dem Zeitpunkt,
   an dem frühestens schädliche Verkürzungen
   bzw. Verkrümmungen auftreten können.

Neben der Oberflächenbeschichtung und den Maßnahmen zur Erreichung eines niedrigen Restfeuchtegehaltes sollte der Verbund zwischen der Versiegelung und dem Untergrund stabil und dauerhaft sein. Hierzu haben sich folgende zusätzliche Maßnahmen empfohlen:
1. Herstellung eines Strukturschaumes nach dem Sandwichprinzip unter Einsatz von sog. semistabilem Schaum.
2. Anwendung von Heißluft bzw. Aufsprühen eines Entschäumers, wobei eine Verfestigung der Oberfläche durch die Entfernung von darin vorhandenem Schaum erfolgt.
3. Zusatz von runden, eckigen oder faserförmigen Feinpartikeln mit Durchmessern bzw. Längen von bis zu 4 mm, bestehend aus SiO₂ oder Metall, die auf den frischen Mörtel oder Beton aufgebracht werden.
   Anhand einer Gegenüberstellung des Schwindverhaltens bei Bauteilen ohne eine Oberflächenbeschichtung einerseits und mit einer erfindungsgemäßen Oberflächenbeschichtung andererseits wird nachfolgend die Wirkung der Erfindung verdeutlicht, wobei der Prüfkörper aller Beispiele jeweils Querschnittsaußenmaße von 8 cm Höhe und 30 cm Breite sowie eine Länge von 200 cm aufweist.
   Beispiel 1: Vollquerschnitt aus Mörtel oder Beton
      1.1 Übliches Material mit einem Gehalt als Anmachwasser > 180 l/m³ und ohne Versiegelung
      1.2 Material gemäß der Erfindung mit einem Gehalt an Anmachwasser < 180 l/m³ und mit Oberflächenbeschichtung
   Beispiel 2: Zweischichtaufbau des Prüfkörpers bestehend aus einer Schicht Mörtel oder Beton und einer Unterschicht, z. B. Tragschicht, Wärmedämmung o. dgl.
      2.1 Mörtel- bzw. Betonschicht wie 1.1
      2.2 Mörtel- bzw. Betonschicht wie 1.2
   Beispiel 3: Dreischichtaufbau des Prüfkörpers bestehend aus zwei Schichten Mörtel oder Beton und einem Sandwichkern, beispielsweise eine Fassadenplatte o. dgl.
      3.1 Mörtel- bzw. Betonschichten wie 1.1
      3.2 Mörtel- bzw. Betonschichten wie 1.2
4. Verformungen vₛ als Mittel aus vₛ₁ und vₛ₂ senkrecht zum Probenstreifen 14 Tage nach Einbau mit einer Lagerung bei 20° C und 65 % relativer Luftfeuchte.

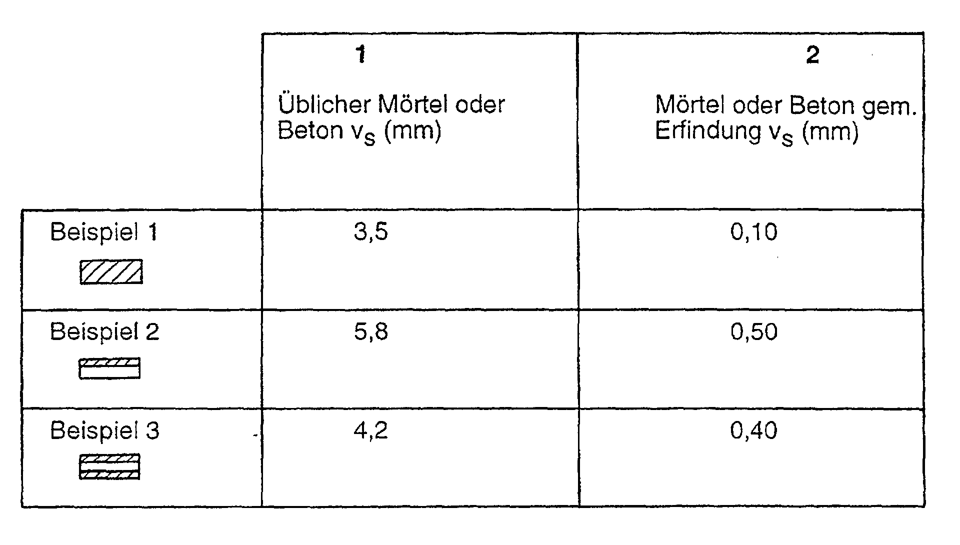

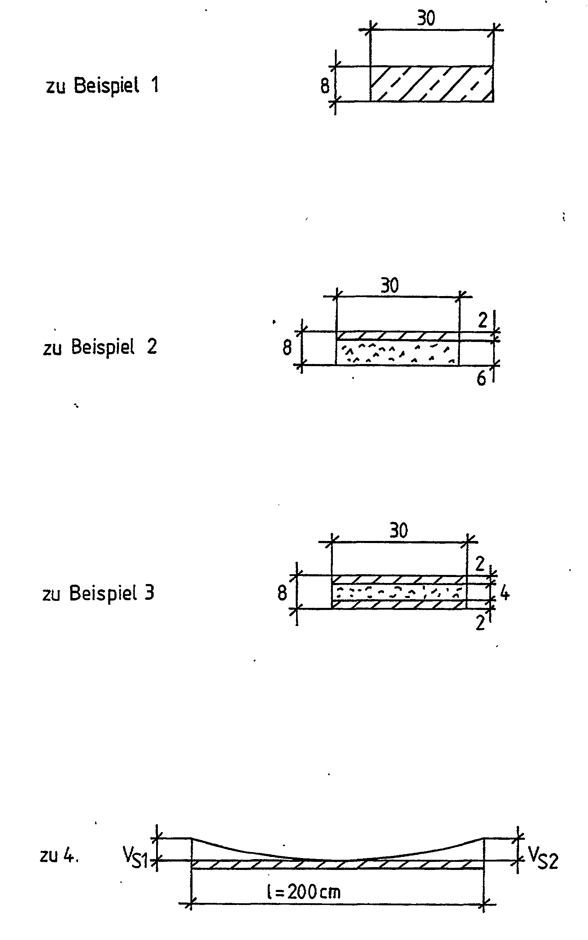

## Patentansprüche

1. Verwendung eines kalthärtenden Flüssigkunststoffes, der einen Gehalt an verdampfbaren, flüchtigen Trägerstoffen von weniger als 25 % aufweist, zur Oberflächenbeschichtung eines dünnwandigen, zementgebundenen, zur Schüssellung neigenden Bauteiles mit planer Oberfläche.

2. Verwendung eines Flüssigkunststoffes nach Anspruch 1, wobei dieser aus Epoxidharzen, Acrylharzen, Polyurethanen o.dgl. besteht, für den Zweck nach Anspruch 1.

3. Verwendung eines Flüssigkunststoffes, der in einer Menge von 0,05 bis 1,5 kg/m² aufgebracht ist, für den Zweck nach Anspruch 1.

4. , Verwendung eines Flüssigkunststoffes nach Anspruch 1, wobei dieser zwischen 6 Stunden und zehn Tagen nach Herstellung des Bauteiles aufgebracht wird, für den Zweck nach Anspruch 1.

5. Verwendung eines Flüssigkunststoffes nach Anspruch 1, wobei das Bauteil bei Auftrag der Oberflächenbeschichtung einen Restfeuchtegehalt von < 5 Gewichts-Prozent aufweist, für den Zweck nach Anspruch 1.

## Claims

1. Use of a cold-curing liquid polymer containing less than 25% of evaporable volatile carrier materials ; for the surface coating of a thin-walled cement-bound component which has. a planar surface and shows a . tendency towards dishing.

2. Use of a liquid polymer according to Claim 1, the said polymer comprising epoxy resins, acrylic resins, polyurethanes or the like, for the purpose according to Claim 1.

3. Use of a liquid polymer applied in an amount from 0. OS to 1.5 kg/m² for the purpose according to Claim 1.

4. Use of a liquid polymer according to Claim 1, applied between 6 hours and ten days following production of the component, for the purpose according to Claim 1.

5. Use of a liquid polymer according to Claim 1,. the component having a residual. moisture content of < 5 per cent by weight when the surface coating is applied, for the purpose according to Claim 1.

## Revendications

1. Utilisation d'une matière plastique liquide durcissable à froid, qui présente une teneur en supports évaporables et volatils inférieure à 25%, pour le revêtement de surface d'un composant à paroi mince, lié au moyen de ciment, qui tend à s'affaisser et qui présente une surface plane.

2. Utilisation d'une matière plastique liquide selon la revendication 1, celle-ci étant constituée de résines époxy, de résines acryliques, de polyuréthannes ou similaires, pour le but selon la revendication 1.

3. Utilisation d'une matière plastique liquide qui est appliquée à raison de 0,05 à 1,5 kg/m², pour le but selon la revendication 1.

4. Utilisation d'une matière plastique liquide selon la revendication 1, celle-ci étant appliquée entre 6 heures et dix jours après fabrication du composant, pour le but selon la revendication 1.

5. Utilisation d'une matière plastique liquide selon la revendication 1, le composant présentant, lors d'application du revêtement de surface, une humidité résiduelle < 5 pour cent en poids, pour le but selon la revendication 1.
